# EUROPÄISCHE PATENTANMELDUNG

(11) **EP 4 807 200 A1**
(43) Veröffentlichungstag der Anmeldung: **16.09.2026**
(21) Anmeldenummer: 26160819.4
(22) Anmeldetag: 26.02.2026
(51) Int. Cl.: F16B 13/12

(54) **DÜBEL**

(30) Priorität: 10.03.2025 DE 102025109024
(71) Anmelder: fischerwerke GmbH & Co. KG, 72178 Waldachtal (DE)
(72) Erfinder: Frey, Christian, 72250 Freudenstadt (DE)
(74) Vertreter: Suchy, Ulrich Johannes

(57) **Zusammenfassung**

Die Erfindung betrifft einen Dübel (1), mit ersten Zungen (7), die aus einem ersten Material, und mit zweiten Zungen (8), die aus einem zweiten, abweichenden Material gebildet sind, wobei die ersten und/oder die zweiten Zungen (7, 8) vorne durch einen vorderen Ring (10) und hinten durch einen hinteren Ring (11) einstückig verbunden sind. Um ein seitliches Austreten eines Spreizelements vor allem bei Plattenbaustoffen zu vermeiden, schlägt die Erfindung vor, dass die ersten oder die zweiten Zungen (7, 8) durch mindestens einen mittleren Ring (12) derart verbunden sind, dass die jeweils anderen der ersten und zweiten Zungen (7, 8) über ihre gesamte Länge in Abständen von den Ringen (10, 11, 12) umfasst sind, die maximal dem 1,5-fachen des Durchmessers betragen.

## Beschreibung

Die Erfindung betrifft einen Dübel mit den Merkmalen des Oberbegriffs des Anspruchs 1.

Aus der Druckschrift EP 3 587 836 B1 ist ein Zweikomponenten-Dübel bekannt mit vier ersten Spreizzungen aus einem ersten Material und vier zweiten Spreizzungen aus einem zweiten Material. Die zweiten Spreizzungen sind vorne und hinten jeweils ringartig verbunden, während sowohl die ersten als auch die zweiten Spreizzungen dazwischen in einem Spreizbereich im Wesentlichen frei verspreizen können.

Eine ähnliche Konstruktion, jedoch mit nur zwei ersten und zwei zweiten Spreizzungen zeigt die Druckschrift EP 3 842 646 B1.

Beim Einbringen einer Schraube in den Spreizkanal werden bei diesen Dübeln die Spreizzungen verspreizt. Die Schraube wird über den Spreizbereich hinaus eingetrieben. Dies hat insbesondere bei einem Plattenbaustoff als Befestigungsgrund eine zusätzliche Funktion: Das vordere Ende wirkt mutternartig mit der Schraube zusammen, was dazu führt, dass bei anhaltender Schrauben-Drehung das vordere Ende nach hinten gezogen und der Dübel somit verkürzt wird. Hierdurch knicken die Spreizzungen aus und bilden eine Art Knoten auf der Rückseite des Plattenbaustoffs. Entsprechend ist es wichtig, dass die Schraube entlang der Längsachse des Dübels eingeführt wird, damit sie das vordere Ende trifft. Nachteilig an den bekannten Dübeln ist, dass eine Schraube, insbesondere wenn sie schräg zur Längsachse des Dübels angesetzt wird, leicht verlaufen kann. Damit ist gemeint, dass sie im Spreizbereich leicht zwischen die ersten und zweiten Spreizzungen geraten und damit nicht mehr das vordere Ende treffen kann. Ist dies der Fall, kann der Dübel nicht verknoten, was die Haltefähigkeiten stark herabsetzt.

Aufgabe der Erfindung ist es daher, einen Dübel zu schaffen, der auch bei schräg angesetzter Schraube zuverlässig verknotet.

Diese Aufgabe wird erfindungsgemäß durch die Merkmale des Anspruchs 1 gelöst. Der erfindungsgemäße Dübel erstreckt sich entlang einer Längsachse und weist ein vorderes Ende auf, mit dem voraus der Dübel in ein Bohrloch einbringbar ist. Insbesondere weist das vordere Ende eine umlaufende Fase auf, die das Einstecken in ein Bohrloch erleichtert. Außerdem ist das vordere Ende insbesondere geschlossen, wodurch verhindert wird, dass beim Einstecken Bohrmehl in das Innere des Dübels gelangt. Der Dübel weist außerdem ein hinteres Ende auf, das eine Öffnung zum Einbringen eines Spreizelements aufweist. Von der Öffnung aus erstreckt sich im Inneren des Dübels ein Spreizkanal entlang der Längsachse. Das hintere Ende kann außerdem einen flanschartigen Kragen aufweisen, der radial über einen Grundkörper des Dübels übersteht und dazu dient, dass der Dübel nur bis zum Kragen in ein Bohrloch gesteckt wird.

Der erfindungsgemäße Dübel weist erste Zungen, die aus einem ersten Material gebildet sind, und zweite Zungen, die aus einem zweiten Material gebildet sind, auf. Insbesondere gibt es jeweils zwei, drei oder vier erste und zweite Zungen, wobei die Anzahl der ersten und zweiten Zungen insbesondere gleich ist. Die beiden Materialien weichen voneinander ab, wobei sich die Abweichung auf die Farbgebung beschränken kann. Insbesondere weisen die Materialien aber unterschiedliche Härten auf, wobei insbesondere das zweite Material weicher als das erste Material ist. Beide Materialien sind insbesondere Kunststoffe.

Die ersten und/oder die zweiten Zungen sind als Spreizzungen ausgebildet. Es können also sowohl die ersten als auch die zweiten Zungen oder nur die ersten bzw. nur die zweiten Zungen als Spreizzungen ausgebildet sein. Als Spreizzungen sind die Zungen durch und beim Einbringen eines Spreizelements, insbesondere einer Schraube, in den Spreizkanal von der Längsachse weg verdrängbar und dadurch nach außen aufspreizbar. Soweit die ersten oder zweiten Zungen nicht als Spreizzungen ausgebildet sind, bilden sie beispielsweise lediglich eine dünne Wand zwischen zwei anderen, als Spreizzungen ausgebildeten, Zungen. Die Zunge kann dann so ausgeführt sein, dass sie - im Gegensatz zu den Spreizzungen - nicht beim Einbringen eines Spreizelements aufgespreizt wird.

Die Zungen sind nicht lediglich punktuelle Elemente, sondern die gemeinsame Erstreckung der ersten und zweiten Zungen parallel zur Längsachse beträgt mindestens das 1,5-fache, insbesondere mindestens das 2,0-fache, des Durchmessers. Mit "gemeinsame Erstreckung" ist hier derjenige Bereich längs des Dübels gemeint, in dem sich sowohl die ersten als auch die zweiten Zungen erstrecken. Mit dem "Durchmesser" ist hier der minimale Durchmesser des Dübels im Bereich der Spreizzungen gemeint. Soweit der Dübel keine kreisförmige Außenkontur aufweist, ist der Durchmesser des kleinsten, den Dübel im Bereich der Spreizzungen umschreibenden Kreises gemeint.

Die ersten und/oder die zweiten Zungen sind vorne durch einen vorderen Ring, der eine vordere geschlossene Umfangsfläche des Dübels bildet, und hinten durch einen hinteren Ring, der eine hintere geschlossene Umfangsfläche des Dübels bildet, einstückig verbunden. Es ist also möglich, dass nur die ersten Zungen oder nur die zweiten Zungen durch einen vorderen und einen hinteren Ring verbunden sind, und zwar unabhängig davon, ob sie Spreizzungen sind. Oder es sind die ersten Zungen nur durch einen vorderen Ring und die zweiten Zungen durch einen hinteren Ring verbunden beziehungsweise umgekehrt. Die Ringe müssen dabei weder ideal kreisförmig noch flach und eben im Sinne einer Erstreckung in Längsrichtung des Dübels sein, aber sie sind über den Umfang geschlossen. Mit "geschlossenen Umfangsflächen" ist jeweils ein über den Umfang ununterbrochener Anteil der Außenkontur am Umfang des Dübels gemeint, also nicht stirnseitig am vorderen oder hinteren Ende. Der vordere und der hintere Ring bewirken, dass die Zungen, insbesondere die Spreizzungen, vorne und hinten zusammengehalten werden. Die Ringe halten die Spreizzungen beim Einführen des Dübels in ein Bohrloch und beim Einführen eines Spreizelements in den Spreizkanal zunächst in Position zueinander, so dass die Schraube gut geführt ist. Der Bereich zwischen dem vorderen und dem hinteren Ring wird nachfolgend auch als "Spreizbereich" bezeichnet, weil sich der Dübel insbesondere hier verspreizen soll. Das schließt aber nicht aus, dass sich die Spreizzungen über den Spreizbereich hinaus erstrecken und schließt auch nicht aus, dass der Dübel außerhalb des Spreizbereichs zusätzlich verspreizt wird.

Mit "Ring" ist allgemein eine in Umfangsrichtung geschlossenes Gebilde gemeint, dass sich parallel zur Längsachse in einem Längsabschnitt nach vorne und hinten erstreckt, so dass in diesem Längsabschnitt ein gedankliches Umfahren des gesamten Umfangs auf dem Ring möglich ist. Dabei liegt der hinterste Punkt eines vorderen Randes insbesondere vor dem vordersten Punkt eines hinteren Randes des Rings. Möglich und erfindungsgemäß ist aber auch, dass der hinterste Punkt des vorderen Randes hinter dem vordersten Punkt des hinteren Randes liegt, und zwar um maximal das 1,0-fache, vorzugsweise maximal das 0,5-fache, des Durchmessers des Rings.

Erfindungsgemäß sind die ersten oder die zweiten Zungen durch mindestens einen mittleren Ring, der zwischen dem vorderen Ring und dem hinteren Ring angeordnet ist und der eine geschlossene Umfangsfläche des Dübels bildet, verbunden. Der vordere, mittlere und hintere Ring sind jeweils beabstandet voneinander. Die Ringe bilden also nicht eine durchgehende, die Außenkontur des Dübels bildende Hülse, die lediglich gedanklich in mehrere Ringe aufgeteilt wird. Die Verbindung durch den mittleren Ring ist derart, dass die jeweils anderen der ersten und zweiten Zungen über ihre gesamte Länge in Abständen von den Ringen umfasst sind, die maximal dem 2,0-fachen, insbesondere maximal dem 1,5-fachen, des Durchmessers betragen. Mit dem "Durchmesser" ist der minimale Durchmesser des Dübels in dem Bereich zwischen den jeweiligen Ringen gemeint. Mit den "Abständen" sind jeweils die parallel zur Längsachse gemessenen Abstände der Ringe gemeint (Rand zu Rand, nicht Mitte zu Mitte). Vorzugsweise betragen die Abstände maximal das 1,0-fache des Durchmessers. Sind also die ersten Zungen durch den mittleren Ring verbunden, so umfassen sie die zweiten Zungen und umgekehrt. Durch den zusätzlichen (mittleren) Ring und die über die Länge des Dübels relativ enge Verteilung der Ringe werden die Zungen derart zusammengehalten, dass ein seitliches Verlaufen des Spreizelements, insbesondere einer Schraube, besser verhindert wird. Anders ausgedrückt wird eine bessere Führung der Schraube erreicht, wodurch diese das vordere Ende des Dübels sicherer trifft und ein Verknoten gewährleistet wird. Bei einer entsprechend großen gemeinsamen Erstreckung der ersten und zweiten Zungen können auch mehrere mittlere Ringe vorgesehen sein.

Vorzugsweise sind die ersten Zungen als Spreizzungen ausgebildet und die zweiten Zungen sind, insbesondere ebenfalls als Spreizzungen, einstückig durch den vorderen, mittleren und hinteren Ring miteinander verbunden. Damit wird erreicht, dass die Ringe aus einem Material gebildet werden können, das für das Zusammenhalten gut geeignet ist, während die ersten Zungen aus einem Material gebildet werden können, die für das Verspreizen geeignet ist. Insbesondere sind die ersten Zungen aus einem härteren Material als die zweiten Zungen.

In einer bevorzugten Ausführungsform gehen die Spreizzungen vorne jeweils in eine Halbschale über, wobei die Halbschalen durch Verbindungselemente verbunden sind. Die Halbschalen liegen sich insbesondere gegenüber bezüglich der Längsachse. Eine Schraube kann sich insbesondere ein Gewinde einschneiden, so dass die Halbschalen als mutternartiges Element dienen können, wobei die Verbindungselemente die Halbschalen in Abstand zueinander halten.

Die Verbindungselemente sind vorzugsweise derart gestaltet, dass eine Bewegung der Halbschalen voneinander weg beim Einführen des Spreizelements zwischen die Halbschalen begünstig wird. Hierdurch können insbesondere Schrauben verschiedener Durchmesser gleichermaßen verwendet werden. Um die Beweglichkeit zu erreichen sind die Verbindungselemente insbesondere nicht gerade, sondern erlauben eine leichte Verformung, beispielsweise durch eine Bogenform.

Um möglichst viel Material in einem Bohrloch mit einer maximalen Anlagefläche verspreizen und die Zungen stabil ausführen zu können, schlägt die Erfindung vor, dass die ersten und zweiten Zungen in Umfangsrichtung nebeneinander liegen, insbesondere unmittelbar aneinander anliegen. Ein unmittelbares aneinander Anliegen wird insbesondere durch Mehrkomponentenspritzguss erreicht, bei dem zuerst die ersten Zungen gespritzt werden, die dann Teil der Form für das anschließende Spritzen der zweiten Zungen bilden oder umgekehrt. Möglich ist auch eine Trennschicht zur Ausbildung einer Gleitfläche, wobei die Trennschicht dünner als 0,1 mm ist. Die Zungen liegen mit Längsseiten aneinander an, wobei die Längsseiten nicht gerade sein müssen, sondern beispielsweise auch gezahnt oder wellig sein können. Vorzugsweise bilden die Anlageflächen Gleitflächen aus, so dass die Zungen sich voneinander weg und/oder gleitend relativ zueinander bewegen können, insbesondere beim Verspreizen und/oder Verknoten des Dübels.

Die Erstreckung des mittleren Rings parallel zur Längsachse beträgt vorzugsweise maximal das 1,5-fache, insbesondere maximal das 1,0-fache, seines Durchmessers. Besonders bevorzugt beträgt die Erstreckung maximal das 0,7-fache. Es hat sich herausgestellt, dass bei einer größeren Erstreckung das Aufspreizen der Spreizzungen zu sehr behindert wird, was sich insbesondere bei einem gegebenenfalls darauffolgenden Verknoten negativ auswirkt.

Auch für den hinteren Ring gilt vorzugsweise, dass dessen Erstreckung parallel zur Längsachse beschränkt ist, und zwar maximal das 1,0-fache, insbesondere maximal das 0,7-fache, seines Durchmessers beträgt. Besonders bevorzugt beträgt die Erstreckung maximal das 0,5-fache. Dies gilt vorzugsweise für den oben genannten Fall, dass die zweiten Zungen durch den vorderen, mittleren und hinteren Ring miteinander verbunden sind.

Die vom mittleren Ring umfassten Zungen sind vorzugsweise im Bereich des mittleren Rings derart ausgenommen, dass der mittlere Ring radial bündig mit den umfassten Zungen ist. Hierdurch wird erreicht, dass der Dübel außen glatt und somit leicht in ein Bohrloch einführbar ist.

Im gleichen Sinne schlägt die Erfindung daher vor, dass der vordere und der hintere Ring sowie die zweiten Zungen radial bündig mit den vom mittleren Ring umfassten Zungen sind.

Um ein Ausknicken der vom mittleren Ring umfassten Zungen im Falle von Befestigungen an Plattenbaustoffen zu begünstigen, schlägt die Erfindung vor, dass der Querschnitt dieser Zungen im Bereich des mittleren Rings über eine Länge, die gleich lang oder kürzer als der mittlere Ring ist, reduziert ist, wobei die Länge parallel zur Längsachse gemessen wird. Anders ausgedrückt weisen die Zungen im Bereich des mittleren Rings eine Schwächung des Querschnitts auf, die das Ausknicken begünstigt.

Die Reduktion des Querschnitts weist vorzugsweise einen ersten Reduktionsbereich auf einer bezüglich der Längsachse radial inneren Seite und einen zweiten Reduktionsbereich auf einer radial äußeren Seite auf, wobei die beiden Reduktionsbereiche räumlich getrennt voneinander sind. Beispielsweise können die beiden Reduktionsbereiche durch eine innere und eine äußere Kerbe gebildet sein. Hierdurch wird ein leichtes Ausknicken gezielt in radialer Richtung erreicht.

Insbesondere für das beschriebene Ausknicken muss der mittlere Ring entsprechend nachgeben, also sich verformen und/oder verschieben. Die Erfindung schlägt vor, dass der mittlere Ring gezielt zum Reißen gebracht werden kann und dazu eine Sollbruchstelle aufweist. Die Sollbruchstelle ist insbesondere im Umfangsrichtung versetzt gegenüber denjenigen Zungen, mit denen der mittlere Ring einstückig ist.

Die Erfindung schlägt vor, dass mindestens eine der vom mittleren Ring umfassten Zungen eine in Längsrichtung des Dübels verlaufende Schneide aufweist und dass die Schneide eine die Sollbruchstelle bildende Nut des mittleren Rings ausfüllt. Die Schneide bildet so die Negativform der Nut, die auch als Kerbe aufgefasst werden kann und eine gezielte Schwächung des mittleren Rings darstellt. Vorzugsweise ist die Schneide in dem oben genannten zweiten Reduktionsbereich angeordnet. Dadurch wird erreicht, dass der mittlere Ring genau dort aufreißt, wo die Zunge, die er umschließt, knicken soll.

Ein Dübel soll im Sinne einer guten Rückmeldung an den Verwender zunächst leicht und dann zunehmend schwerer in ein Bohrloch einführbar sein. Hierzu hat es sich als günstig herausgestellt, den vorderen Teil eher zylindrisch und den hinteren Teil konisch zu formen. Bevorzugt ist es, dass die ersten und zweiten Zungen vor dem mittleren Ring im Wesentlichen eine zylindrische Außenkontur des Dübels bilden und sich hinter dem mittleren Ring konisch erweitern

Die vorstehend in der Beschreibung genannten Merkmale beziehen sich, soweit nicht explizit anders ausgeführt, auf den kraftfreien Zustand des Dübels, also außerhalb eines Bohrlochs und ohne ein in den Spreizkanal eingeführtes Spreizelement. Anders ausgedrückt geht es um den Ausgangszustand vor der Verwendung des Dübels und ohne Verformungen.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der

Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiteren Ausführungsbeispiele aufweisen, sind möglich.

Die Erfindung wird nachfolgend anhand eines Ausführungsbeispiels erläutert.

Es zeigen:
- Figur 1: den erfindungsgemäßen Dübel in einer perspektivischen Darstellung;
- Figur 2: denselben Dübel in einer perspektivischen Darstellung, jedoch nur das erste Material;
- Figur 3: denselben Dübel in einer perspektivischen Darstellung in einem ersten Längsschnitt;
- Figur 4: denselben Dübel in einer perspektivischen Darstellung in einem zweiten Längsschnitt in einer um 90° versetzten Ebene;
- Figur 5: den Längsschnitt aus Figur 3, jedoch in einer nicht-perspektivischen Darstellung;
- Figur 6: den Längsschnitt aus Figur 4, jedoch in einer nicht-perspektivischen Darstellung;
- Figur 7: denselben Dübel in einer perspektivischen Darstellung mit einem Querschnitt in einer mit Pfeilen VII in den Figuren 5 und 6 dargestellten Ebene; und
- Figur 8: denselben Dübel in einer perspektivischen Darstellung mit einem Querschnitt in einer mit Pfeilen VIII in den Figuren 5 und 6 dargestellten Ebene.

Sämtliche Figuren sind maßstäblich. Insbesondere lassen sich somit Größenverhältnisse entnehmen.

Der in den Figuren dargestellte Dübel 1 erstreckt sich entlang einer Längsachse 2. Im Weiteren meinen die Begriffe "Länge" und "in Längsrichtung" stets die Erstreckung parallel zur Längsachse 2, und die Begriffe "in Umfangsrichtung" und "radial" beziehen sich ebenfalls auf die Längsachse 2. Ein vorderes Ende 3, mit dem voraus der Dübel 1 in ein Bohrloch (nicht dargestellt) gesteckt werden kann, ist in den Figuren jeweils rechts beziehungsweise in den perspektivischen Darstellungen vorne, und entsprechend ein hinteres Ende 4 links beziehungsweise hinten zu finden. Der Dübel 1 ist am vorderen Ende 3 geschlossen und weist eine im Wesentlichen ebene Stirnseite 20 auf. In etwa die vordere Hälfte des Dübels 1 weist eine zylindrische Außenkontur auf. Die zylindrische Außenkontur geht mit einer Fase 21 in die Stirnseite 20 über. In der hinteren Hälfte erweitert sich nach hinten die Außenkontur leicht konisch. Außerdem sind mehrere Drehsicherungsrippen 22 jeweils um 90° versetzt über den Umfang verteilt angeordnet, die in an sich bekannter Weise einer Verdrehung des Dübels 1 beim Einbringen einer Schraube (nicht dargestellt) entgegenwirken. Am hinteren Ende 4 ist ein flanschartiger Kragen 23 angeordnet, der in ebenfalls bekannter Weise dafür sorgt, dass der Dübel 1 nicht zu tief in ein Bohrloch geschoben wird.

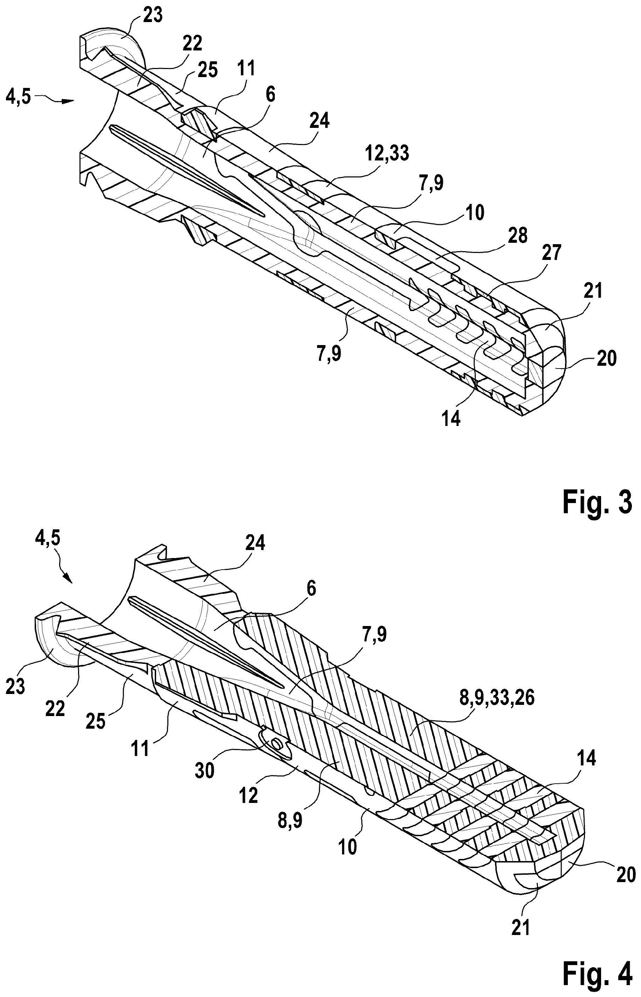

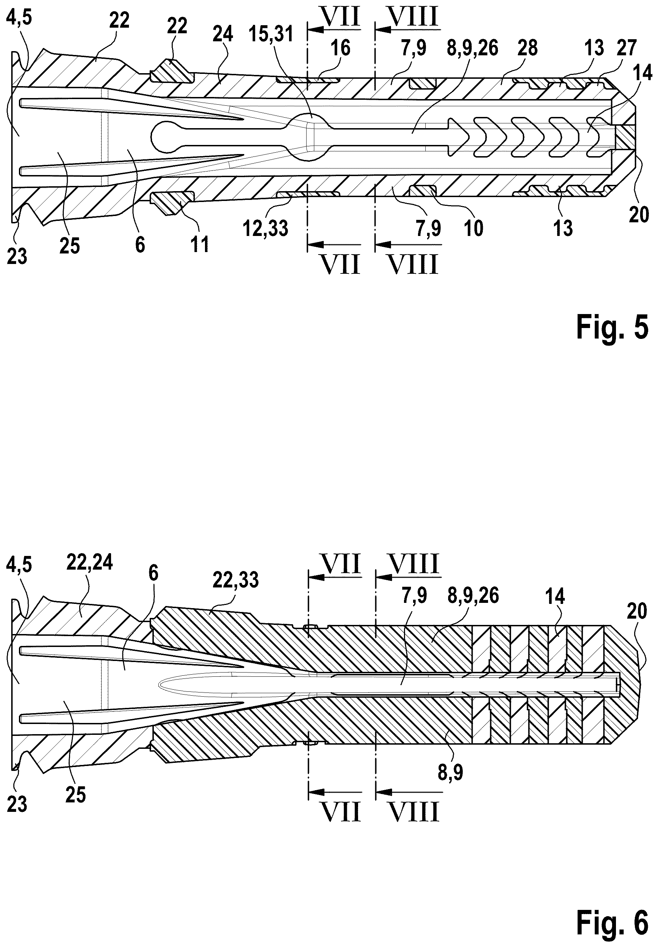

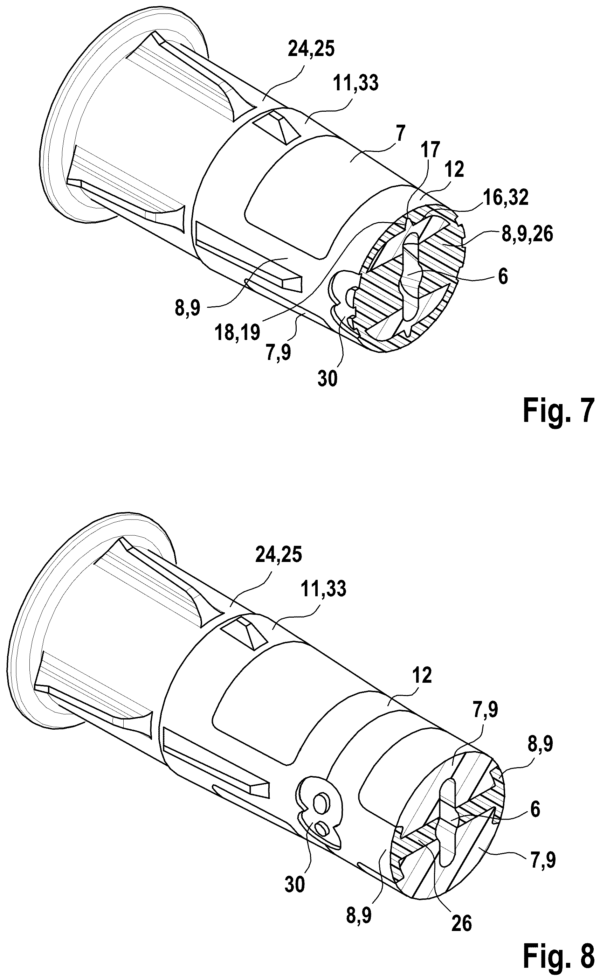

Wie in den Figuren 3 bis 8 ersichtlich ist, weist das hintere Ende 4 außerdem eine Öffnung 5 zum Einbringen eines Spreizelements auf, von der aus sich entlang der Längsachse 2 ein Spreizkanal 6 bis fast bis zum vorderen Ende 3 erstreckt. Der Spreizkanal 6 ist etwa über das hintere Achtel des Dübels 1 im Wesentlichen zylindrisch, verjüngt sich dann bis etwa zur Mitte des Dübels 1 und weist in der vorderen Hälfte einen konstanten, in etwa schlitzförmigen Querschnitt mit einer zentralen kreisförmigen Erweiterung auf, wie in den Figuren 7 und 8 erkennbar ist.

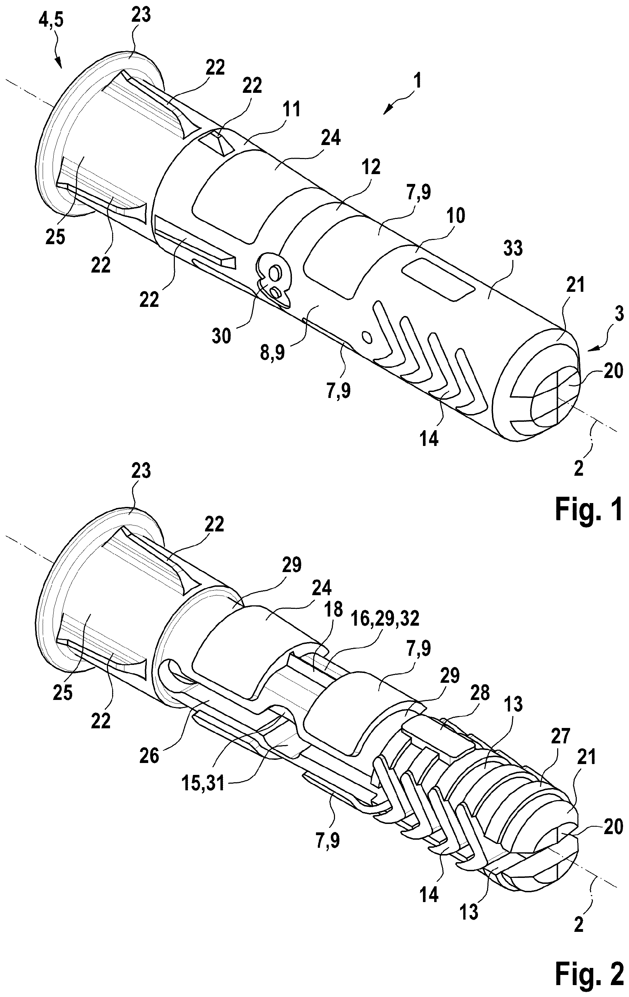

In der Figur 2 ist lediglich eine der beiden Komponenten des Dübels 1 dargestellt, nämlich die erste Komponente 24 aus einem ersten Material, hier Polyamid. Die erste Komponente 24 umfasst den Kragen 23 und eine sich daran anschließende hintere Hülse 25, die sowohl die Außen- als auch die Innenkontur des Dübels 1 in diesem Bereich bildet und auf der vier der Drehsicherungsrippen 22 über den Umfang verteilt angeordnet sind. An die Hülse 25 schließen vorne zwei erste Zungen 7 an, die nach ihrer Funktion Spreizzungen 9 und als solche ausgebildet sind. Die Spreizzungen 9 sind durch einen Längsschlitz 26 getrennt. An ihrem vorderen Ende 3 gehen die ersten Zungen 7 jeweils in Halbschalen 13 über, die auch als Teil der Spreizzungen 9 aufgefasst werden können, hier jedoch begrifflich als separate Elemente verstanden werden. Die beiden Halbschalen 13 sind durch mehrere Verbindungselemente 14 derart verbunden, dass sie sich beim Einschrauben einer Schraube voneinander wegbewegen können, jedoch weniger leicht als die Spreizzungen 9. Die Halbschalen 13 sollen sich so an unterschiedliche Schraubendurchmesser anpassen können, der Schraube aber auch wie eine Mutter festen Halt geben. Dazu sind die Verbindungselemente 14 elastisch und plastisch durch das erste Material und durch ihre Form entsprechend gestaltet, so dass eine Bewegung der Halbschalen 13 voneinander weg beim Einführen der Schraube zwischen die Halbschalen 13 begünstig wird. Die Form ist hier in der Seitenansicht pfeilförmig und als solche auch sichtbar für den Verwender. Alternativ könnte die Form beispielsweise auch U-, X-förmig oder als Filmscharnier mit einem in Längsrichtung gesehen U-förmigen Querschnitt ausgeführt sein und/oder die Proportionen verändert werden. Auch kann die Form der Verbindungselemente 14 weiter innen von der Form weiter außen variieren, so dass der äußerlich sichtbare Teil einen großen Gestaltungsspielraum für die ästhetische Gestaltung des Dübels 1 bietet. Im Ausführungsbeispiel sind die Verbindungselemente 14 als vier eng aufeinanderfolgende und nach vorne gerichtete Pfeile sichtbar und verkörpern dadurch ein kraftvolles Design. Die Halbschalen 13 weisen zudem mehrere über die Länge verteilte und sich im Umfangrichtung erstreckende Rippen 27 auf, auf deren Funktion im Weiteren noch eingegangen wird. Weiterhin weisen die Halbschalen 13 jeweils einen quaderförmigen Block 28 auf, der sich in Längsrichtung erstreckt, 90° versetzt zu den Verbindungselementen 14 ist und die Rippen 27 radial leicht überragt.

Bei der Herstellung des Dübels 1 wird zunächst die erste Komponente 24 gespritzt und diese dann auf dem Werkzeugkern in ein zweites Formnest gebracht, wo die ersten Komponente 24 mit einer zweiten Komponente 33 aus einem zweiten Material, hier Polypropylen, umspritzt wird. Die Figuren verwenden an den Schnittstellen einheitlich jeweils die gleichen für die Komponenten 24, 33 unterschiedlichen Schraffuren für die beiden Komponenten 24, 33.

Die ersten Zungen 7 werden vorne von einem vorderen Ring 10, in der Mitte von einem mittleren Ring 12 und hinten von einem hinteren Ring 11 umfasst. Die Ringe 10, 11, 12 bilden jeweils eine geschlossene Umfangsfläche des Dübels 1. Zur Anordnung der Ringe 10, 11, 12 weisen die ersten Zungen 7 umlaufende Ausnehmungen 29 auf, wie es in Figur 2 gut erkennbar ist. Die Ringe 10, 11, 12 sind im Bereich des Längsschlitzes 26 durch zweite Zungen 8 verbunden, die ebenfalls nach ihrer Funktion Spreizzungen 9 und als solche ausgebildet sind. Die zweiten Zungen 8 reichen radial vom Spreizkanal 6 bis zur Außenkontur. Damit liegen die ersten und zweiten Zungen 7, 8 an Längsseiten aneinander an. Sowohl die Ringe 10, 11, 12 als auch die zweiten Zungen 8 schließen radial bündig mit der ersten Komponente 24 beziehungsweise den ersten Zungen 7 ab, so dass sich eine im Wesentlichen glatte Oberfläche ergibt. Im Ausführungsbeispiel gehen an der Außenkontur die Ringe 10, 11, 12 mit engen Radien in die zweiten Zungen 8 über. Um eine andere ästhetische Gestaltung zu erreichen, könnten diese Übergänge größer dimensioniert und/oder kantig gewählt sowie die Proportionen leicht verändert werden.

Die gemeinsame Erstreckung der ersten und zweiten Zungen 7, 8 parallel zur Längsachse 2 beträgt etwa das 2,5-Fache des minimalen Durchmessers im Bereich der Zungen 7. Der Abstand des vorderen zum mittleren Ring 10, 12 beträgt etwa das 0,6-Fache und der Abstand des mittleren zum hinteren Ring 11, 12 etwa das 0,7-Fache des minimalen Durchmessers im jeweiligen Bereich. Die Erstreckung des mittleren Rings 12 parallel zur Längsachse 2 beträgt etwa das 0,5-Fache seines Durchmessers. Beim hinteren Ring 11 ist es etwa das 0,35-Fache.

Im Bereich der Halbschalen 13 überdeckt die zweite Komponente 33 die Rippen 27 vollständig, so dass diese nicht sichtbar sind und sich durch die Verzahnung ein Formschluss zwischen den beiden Komponenten 24, 33 in Längsrichtung ergibt. Zusätzlich auch in Umfangsrichtung wirkt formschlüssig der Block 28, der als sichtbares Element einen Teil der Außenkontur bildet und zusätzlich eine abstützende Wirkung beim Spritzen des Dübels 1 hat. Der Block 28 könnte alternativ beispielsweise auch elliptisch, rautenförmig, wellenförmig, sternförmig oder dergleichen geformt sein und/oder die Proportionen verändert werden. Somit kann er ebenfalls für die ästhetische Gestaltung genutzt werden. Die zweite Komponente 33 ist auch zwischen den Verbindungselementen 14 angeordnet und reicht zwischen den Halbschalen 13 radial bis zum Spreizkanal 6. Auch die zweite Komponente 33 hat somit eine verbindende Wirkung für die beiden Halbschalen 13, allerdings vergleichsweise untergeordnet, da Polypropylen deutlich leichter verformbar ist als Polyamid. Am vorderen Ende 3 des Dübels 1 reicht die zweite Komponente 33 bis zur Stirnseite 20 und sorgt dafür, dass der Spreizkanal 6 vorne geschlossen ist. Das hat den Vorteil, dass eventuell vorhandenes Bohrmehl beim Einschieben des Dübels 1 in ein Bohrloch nicht ins Innere des Dübels 1 dringt, was das Einschrauben einer Schraube behindern könnte.

Im Bereich des mittleren Rings 12 ist auf beiden zweiten Zungen 8 eine "8" als Größenangabe 30 eingeprägt, bildet also eine leichte Vertiefung. Dahinter ist jeweils eine weitere, längere Drehsicherungsrippe 22 auf der zweiten Komponente 33 angeordnet, die in Flucht mit einer der Drehsicherungsrippen 22 an der hinteren Hülse 25 steht. Auch auf dem hinteren Ring 11 sind zwei Drehsicherungsrippen 22 in Flucht mit den beiden anderen Drehsicherungsrippen 22 an der hinteren Hülse 25 angeordnet.

Beim Einführen einer Schraube als Spreizelement spreizt diese alle vier Spreizzungen 9 radial nach außen. An den Kontaktflächen zwischen den beiden Komponenten 24, 33 besteht keine nennenswerte Verbindung, so dass Gleitflächen gebildet sind. Dadurch können sich die Zungen 7, 8, die im unverspreizten Zustand unmittelbar aneinander anliegen, voneinander weg und/oder gleitend relativ zueinander bewegen. Dabei wirken die Ringe 10, 11, 12 der Spreizbewegung etwas entgegen. In einem Vollbaustoff hat dies jedoch kaum Auswirkungen, da durch die Schraube und die Bohrlochinnenwand als Widerlager sehr hohe Kräfte entwickelt werden. In einem Plattenbaustoff, bei dem der vordere Teil des Dübels 1 bis beispielsweise zum hinteren Ring 11 in einen Hohlraum ragt, haben die Ringe 10, 11, 12 dagegen die Funktion, dass die Spreizzungen 9 beim Einschrauben der Schraube etwas zusammengehalten werden und damit die Gefahr, dass die Schraube schräg aus dem Dübel 1 austritt, verringert wird. Anders ausgedrückt bleibt die Geometrie und damit die Führungsfunktion des Spreizkanals 6 besser erhalten. Damit ist gewährleistet, dass die Schraube entlang der Längsachse 2 zwischen die Halbschalen 13 gelangt. Wenn die Schraube vollständig eingeschraubt ist und mit ihrem Kopf auf dem Befestigungsgegenstand oder dem Kragen 23 aufsitzt, wird durch ein weiteres Drehen der Schraube ein gewindetriebartiges Heranziehen der Halbschalen 13 in Richtung des hinteren Endes 4 erreicht. In diesem Zustand sind die Spreizzungen 9 wie bereits ausgeführt, bereits etwas verspreizt. Durch das Zusammenziehen des Dübels 1 in Längsrichtung knicken die Spreizzungen 9 kniehebelartig aus. Dazu weisen die ersten Zungen 7 im Bereich des mittleren Rings 12 eine innere Kerbe 31, die einen ersten Reduktionsbereich 15 bildet, und eine äußere Abflachung 32, die einen zweiten Reduktionsbereich 16 bildet, auf. Die innere Kerbe 31 ist gewölbt, erstreckt sich als Sekante durch die Mantelfläche des Dübels 1 und ist in Längsrichtung des Dübels 1 gemessen kürzer als der mittlere Ring 12. Die Abflachung 32 erstreckt sich ebenfalls als Sekante durch die Mantelfläche des Dübels 1, ist aber genauso lang wie der mittlere Ring 12. Aufgesetzt auf die Abflachung 32 erstreckt sich in Längsrichtung eine Schneide 18, die eine Nut 19 im mittleren Ring 12 ausfüllt, wie aus den Figuren 2 und 7 deutlich wird. Die Nut 19 erstreckt sich über die gesamte Länge des mittleren Rings 12 und bildet eine Sollbruchstelle 17, die ein Aufreißen des mittleren Rings 12 bei größeren Kräften provoziert. Das Aufreißen kann bereits vor dem beschriebenen Zusammenziehen erfolgen oder in dessen Zuge. Sobald der mittlere Ring 12 nicht mehr geschlossen ist, können alle Spreizzungen 9 deutlich leichter verspreizen, ausknicken und/oder verknoten.

### Bezugszeichenliste

- 1: Dübel
- 2: Längsachse
- 3: vorderes Ende
- 4: hinteres Ende
- 5: Öffnung
- 6: Spreizkanal
- 7: erste Zunge
- 8: zweite Zunge
- 9: Spreizzunge
- 10: vorderer Ring
- 11: hinterer Ring
- 12: mittlerer Ring
- 13: Halbschale
- 14: Verbindungselement
- 15: erster Reduktionsbereich
- 16: zweiter Reduktionsbereich
- 17: Sollbruchstelle
- 18: Schneide
- 19: Nut
- 20: Stirnseite
- 21: Fase
- 22: Drehsicherungsrippen
- 23: Kragen
- 24: erste Komponente
- 25: hintere Hülse
- 26: Längsschlitz
- 27: Rippe
- 28: Block
- 29: Ausnehmung
- 30: Größenangabe
- 31: innere Kerbe
- 32: Abflachung
- 33: zweite Komponente

## Patentansprüche

1. Dübel (1), der sich entlang einer Längsachse (2) erstreckt,
mit einem vorderen Ende (3), mit dem voraus der Dübel (1) in ein Bohrloch einbringbar ist, und mit einem hinteren Ende (4), das eine Öffnung (5) zum Einbringen eines Spreizelements aufweist, wobei sich von der Öffnung (5) aus im Inneren des Dübels (1) ein Spreizkanal (6) entlang der Längsachse (2) erstreckt, mit ersten Zungen (7), die aus einem ersten Material, und mit zweiten Zungen (8), die aus einem zweiten, abweichenden Material gebildet sind, wobei die ersten und/oder die zweiten Zungen (7, 8) als Spreizzungen (9) durch und beim Einbringen eines Spreizelements in den einen Spreizkanal (6) des Dübels (1) von der Längsachse (2) weg verdrängbar und dadurch nach außen aufspreizbar sind, wobei die gemeinsame Erstreckung der ersten und der zweiten Zungen (7, 8) parallel zur Längsachse (2) mindestens das 1,5-fache, insbesondere mindestens das 2,0-fache, des Durchmessers beträgt,
wobei mit dem Durchmesser der minimale Durchmesser des Dübels (1) im Bereich der Zungen (7, 8) gemeint ist,
wobei die ersten und/oder die zweiten Zungen (7, 8) vorne durch einen vorderen Ring (10), der eine vordere geschlossene Umfangsfläche des Dübels (1) bildet, und hinten durch einen hinteren Ring (11), der eine hintere geschlossene Umfangsfläche des Dübels (1) bildet, einstückig verbunden sind,
**dadurch gekennzeichnet, dass** die ersten oder die zweiten Zungen (7, 8) durch mindestens einen mittleren Ring (12), der zwischen dem vorderen Ring (10) und dem hinteren Ring (11) angeordnet ist und der eine geschlossene Umfangsfläche des Dübels (1) bildet, derart verbunden sind, dass die jeweils anderen der ersten und zweiten Zungen (7, 8) über ihre gesamte Länge in Abständen von den Ringen (10, 11, 12) umfasst sind, die maximal dem 2,0-fachen, insbesondere maximal dem 1,5-fachen, des Durchmessers betragen.

2. Dübel (1) nach Anspruch 1, **dadurch gekennzeichnet, dass** die ersten Zungen (7) als Spreizzungen (9) ausgebildet sind und die zweiten Zungen (8), insbesondere als Spreizzungen (9), einstückig durch den vorderen, mittleren und hinteren Ring (10, 11, 12) miteinander verbunden sind.

3. Dübel (1) nach Anspruch 1 oder 2, **dadurch gekennzeichnet, dass** die Spreizzungen (9) vorne jeweils in eine Halbschale (13) übergehen, und dass die Halbschalen (13) durch Verbindungselemente (14) verbunden sind.

4. Dübel (1) nach Anspruch 3, **dadurch gekennzeichnet, dass** die Verbindungselemente (14) derart gestaltet sind, dass eine Bewegung der Halbschalen (13) voneinander weg beim Einführen des Spreizelements zwischen die Halbschalen (13) begünstig wird.

5. Dübel (1) nach einem oder mehreren der vorstehenden Ansprüche, **dadurch gekennzeichnet, dass** die ersten und zweiten Zungen (7, 8) in Umfangsrichtung nebeneinander liegen, insbesondere unmittelbar aneinander anliegen.

6. Dübel (1) nach einem oder mehreren der vorstehenden Ansprüche, **dadurch gekennzeichnet, dass** die Erstreckung des mittleren Rings (12) parallel zur Längsachse (2) maximal das 1,5-fache, insbesondere maximal das 1,0-fache, seines Durchmessers beträgt.

7. Dübel (1) nach einem oder mehreren der vorstehenden Ansprüche, **dadurch gekennzeichnet, dass** die Erstreckung des hinteren Rings (11) parallel zur Längsachse maximal das 1,0-fache, insbesondere maximal das 0,7-fache, seines Durchmessers beträgt.

8. Dübel (1) nach einem oder mehreren der vorstehenden Ansprüche, **dadurch gekennzeichnet, dass** die vom mittleren Ring (12) umfassten Zungen (7) im Bereich des mittleren Rings (12) derart ausgenommen sind, dass der mittlere Ring (12) radial bündig mit den umfassten Zungen (7) ist.

9. Dübel (1) nach einem oder mehreren der vorstehenden Ansprüche, **dadurch gekennzeichnet, dass** der vordere und der hintere Ring (10, 11) sowie die zweiten Zungen (8) radial bündig mit den vom mittleren Ring (12) umfassten Zungen (7) sind.

10. Dübel (1) nach einem oder mehreren der vorstehenden Ansprüche, **dadurch gekennzeichnet, dass** der Querschnitt der vom mittleren Ring (12) umfassten Zungen (7) im Bereich des mittleren Rings (12) über eine Länge, die gleich lang oder kürzer als der mittlere Ring (12) ist, reduziert ist, wobei die Länge parallel zur Längsachse (2) gemessen wird.

11. Dübel (1) nach Anspruch 10, **dadurch gekennzeichnet, dass** die Reduktion des Querschnitts einen ersten Reduktionsbereich (15) auf einer bezüglich der Längsachse (2) radial inneren Seite und einen zweiten Reduktionsbereich (16) auf einer radial äußeren Seite aufweist, und dass die beiden Reduktionsbereiche (15, 16) räumlich getrennt voneinander sind.

12. Dübel (1) nach einem oder mehreren der vorstehenden Ansprüche, **dadurch gekennzeichnet, dass** der mittlere Ring (12) eine Sollbruchstelle (17) aufweist, die insbesondere im Umfangsrichtung versetzt gegenüber denjenigen Zungen (8) ist, mit denen der mittlere Ring (12) einstückig ist.

13. Dübel (1) nach Anspruch 12, **dadurch gekennzeichnet, dass** mindestens eine der vom mittleren Ring (12) umfassten Zungen (7) eine in Längsrichtung des Dübels (1) verlaufende Schneide (18) aufweist, dass die Schneide (18) eine die Sollbruchstelle (17) bildende Nut (19) des mittleren Rings (12) ausfüllt, und dass die Schneide (18) insbesondere im zweiten Reduktionsbereich (16) gemäß Anspruch 11 angeordnet ist.

14. Dübel (1) nach einem oder mehreren der vorstehenden Ansprüche, **dadurch gekennzeichnet, dass** die ersten und zweiten Zungen (7, 8) vor dem mittleren Ring (12) im Wesentlichen eine zylindrische Außenkontur des Dübels (1) bilden und sich hinter dem mittleren Ring (12) konisch erweitern.
